# EUROPÄISCHE PATENTSCHRIFT

(11) **EP 2 767 492 B1**
(45) Veröffentlichungstag und Bekanntmachung des Hinweises auf die Patenterteilung: **29.03.2017**
(21) Anmeldenummer: 14154011.2
(22) Anmeldetag: 05.02.2014
(51) Int. Cl.: B65G 21/06

(54) **Fördereinrichtung mit einem flächig ausgedehnten Förderorgan und einem modularen Rahmen**
Conveying device with an extended conveying body and a modular frame
Dispositif de convoyage doté d'un organe de transport à extension plane et un cadre modulaire

(30) Priorität: 18.02.2013 CH 4742013
(43) Veröffentlichungstag der Anmeldung: 20.08.2014
(73) Patentinhaber: WRH Walter Reist Holding AG, 8272 Ermatingen (CH)
(72) Erfinder: Aliesch, Robert, 8841 Gross (CH)
(74) Vertreter: Frei Patent Attorneys

(56) Entgegenhaltungen:
- WO-A1-03/082679
- WO-A2-2010/115410
- DE-C- 886 874
- GB-A- 1 061 532
- JP-A- S4 980 822
- JP-U- S5 226 392
- US-A- 3 944 054

## Beschreibung

Die Erfindung bezieht sich auf das Gebiet der Fördertechnik und betrifft eine Fördereinrichtung nach dem Oberbegriff des Anspruchs 1. Die Fördereinrichtung enthält wenigstens ein umlaufendes, flächig ausgedehntes Förderorgan, sowie eine Rahmenkonstruktion mit einer Mehrzahl von Rahmenprofilen zur seitlichen Einfassung des Förderorgans. Wenigstens zwei Rahmenprofile der Rahmenkonstruktion sind als Hohlprofile ausgebildet und in ihrer Profillängsachse über stirnseitige Endabschnitte miteinander verbunden.

Fördereinrichtungen mit einem umlaufenden, flächig ausgedehnten Förderorgan wie Förderband oder Mattenkette sind im Stand der Technik bekannt. Die Förderorgane werden in der Regel an einer oder zwei Umlenkstellen mittels einer Umlenkwelle angetrieben. Zur Abstützung der Förderorgane im Bereich des oberen Trums, auf welchem das Fördergut aufliegt, werden diese zwischen den Umlenkstellen auf Gleitschienen gleitend geführt. Es sind auch Fördereinrichtungen bekannt, bei welchen das Förderorgan zwischen den Umlenkstellen auf Rollenkörpern abgestützt ist und über diese abrollt.

Die Fördereinrichtung enthält in der Regel eine Rahmenkonstruktion aus einer Mehrzahl von Rahmenprofilen. Diese dient insbesondere als Tragrahmen für die Komponenten der Fördereinrichtung wie Antrieb, Förderorgan und Abstützstruktur für das Förderorgan. Der Tragrahmen umfasst längs laufende Rahmenprofile, welche das Förderorgan seitlich einfassen, und Querprofile, welche die längs laufenden Rahmenprofile miteinander verbindet. Diese Querprofile sind insbesondere am vorderen und hinteren Kopfende der Fördereinrichtung angeordnet. Zudem können zwischen den Kopfenden Querstreben vorgesehen sein, welche sich zwischen den seitlichen Rahmenprofilen erstrecken und mit diesen verbunden sind.

Die genannten Fördereinrichtungen finden beispielsweise als Werkermitfahrbänder Verwendung.

Die DE 10 2006 010 974 A1 und die DE 10 2007 017 628 A1 beschreiben eine Fördereinrichtung mit einem Förderband sowie einem im Wesentlichen horizontalen Profilrahmen mit zwei seitlichen, sich in Längsrichtung des Förderbandes erstreckenden Seitenprofilen. Die Fördereinrichtung dient insbesondere als Werkermitfahrband.

Die Publikationsschrift DE 886 874 beschreibt ein Traggerüst für ein Förderband mit Holmen aus U-Eisen. Die Holme weisen an ihren Enden entgegengesetzt angeordnete, eckige Ausklinkungen auf, welche ineinandergreifen. Die ineinandergreifenden Ausklinkungen sind über aufgesteckte U-förmige Verbindungskappen mittels Verbindungsschrauben lösbar miteinander verbunden.

Die Publikationsschrift JP 52-26392 beschreibt eine Rahmenverbindung für eine Rolltreppe. Der Rahmen enthält L-förmige Rahmenprofile, welche gemäss einer ersten Ausführung an ihren Enden über massive, hakenförmige Verbindungskörper miteinander verbunden sind. Die hakenförmigen Verbindungskörper greifen hakenartig ineinander.

Die GB 1 061 532 A offenbart eine Fördereinrichtung nach dem Oberbegriff des Anspruchs 1.

Werkermitfahrbänder werden häufig in den Boden versenkt, so dass die durch das Förderorgan ausgebildete Förderfläche ebenerdig ist. Dadurch werden Stufen und Absätze vermieden, was den Zugang erheblich vereinfacht und die Unfallgefahr vermindert. Eine solche Anordnung weist jedoch den Nachteil auf, dass die Bauteile solcher Werkermitfahrbänder nur von oben zugänglich sind. Dies erschwert die Montage und Demontage der Fördereinrichtung als auch die Zugänglichkeit der einzelnen Bauteile der Fördereinrichtung für Wartungs- und Reparaturarbeiten.

Bei anderen Anwendungen, zum Beispiel in der Lagerraumbewirtschaftung, sind die Bauteile der Fördereinrichtung nur von unten zugänglich.

Eine weitere Anforderung an die Fördereinrichtung ist die flexible Baulänge in Förderrichtung. So soll es möglich sein, Fördereinrichtungen unterschiedlicher Baulänge, d.h. mit unterschiedlich langen Förderstrecken, aus denselben Bauteilen zu fertigen. Auf diese Weise sollen teure Einzelanfertigungen mit unterschiedlichen Baulängen vermieden werden.

Es ist deshalb Aufgabe der Erfindung, eine Fördereinrichtung der eingangs genannten Art vorzuschlagen, welche einerseits eine gute Zugänglichkeit gewährleistet, auch wenn diese im Boden versenkt ist. Ferner soll die Fördereinrichtung modular in unterschiedlichen Baulängen unter Verwendung gleicher Bauteile ausführbar sein.

Die Aufgabe wird durch eine Fördereinrichtung nach Anspruch 1 und durch einen Bausatz nach Anspruch 8 gelöst.

Weitere Ausführungsformen und Weiterbildungen der Erfindung gehen aus den abhängigen Patentansprüchen, der Beschreibung sowie aus den Figuren hervor.

Die erfindungsgemässe Fördereinrichtung enthält wenigstens ein umlaufendes, flächig ausgedehntes Förderorgan und eine Rahmenkonstruktion mit einer Mehrzahl von Rahmenprofilen zur seitlichen Einfassung des Förderorgans. Unter Rahmenprofil ist ein lang gestrecktes Bauteil zu verstehen.

Wenigstens zwei Rahmenprofile der Rahmenkonstruktion sind als Hohlprofile ausgebildet und in ihrer Profillängsachse über stirnseitige Endabschnitte miteinander verbunden. Die wenigstens zwei Rahmenprofile weisen bevorzugt die gleiche Querschnittsgeometrie auf, wobei fertigungsbedingte Abweichungen, so genannte Toleranzen, zulässig sind.

Die genannten Hohlprofile sind Längsbauteile, vorzugsweise aus Metall, wie Stahl oder Aluminium. Die Hohlprofile können jedoch auch aus Kunststoff sein. Die Hohlprofile können z. B. Strangpressprofile sein.

Die Profilwände der beiden Rahmenprofile sind an ihren stirnseitigen Endabschnitten, derart ausgestaltet, dass die beiden Rahmenprofile an ihren stirnseitigen Endabschnitten eine formschlüssige Verbindung ausbilden. Die formschlüssige Verbindung wirkt den längs, quer und vertikal auf die Verbindung wirkenden Kräfte entgegen.

Eine Formschlussverbindung wird bevorzugt jeweils von zwei mit ihren Stirnkanten zusammentreffenden Seitenwänden der zu verbindenden Rahmenprofile ausgebildet.

Die beiden Rahmenprofle sind also seitliche Längsprofile, welche parallel zur Förderrichtung des Förderorgans verlaufen. Das Förderorgan weist z. B. einen oberen Trum auf, welcher die Förderfläche ausbildet. Ferner weist das Förderorgan einen unteren Trum auf, welcher das Förderorgan zurückführt. Das Förderorgan ist insbesondere flexible ausgebildet.

Die Fördereinrichtung kann unterhalb des oberen Trums, insbesondere zwischen dem oberen und unteren Trum eine Abstützstruktur zur rollenden Abstützung des Förderorgans bzw. des oberen Trums gegen unten enthalten. Die Abstützstruktur, welche z. B. Stützrollen umfasst, kann über Querstreben auf der Rahmenkonstruktion, insbesondere auf den seitlichen Rahmenprofilen, abgestützt sein.

Die Fördereinrichtung kann ferner eine Antriebsvorrichtung zum Antreiben des Förderorgans enthalten. Diese kann an einer Umlenkstelle des Förderorgans, z. B. am vorderen oder hinteren Kopfende der Fördereinrichtung angeordnet sein.

Die Profilwände der beiden Rahmenprofile sind an ihren stirnseitigen Endabschnitten im Weiteren bevorzugt derart ausgestaltet, dass eines der beiden Rahmenprofile vertikal nach oben oder vertikal nach unten bewegbar ist und in der Gegenrichtung am anderen Rahmenprofil ansteht.

Die Richtungsbezeichnungen "vertikal" bzw. "vertikal nach unten" und "vertikal nach oben" beziehen sich auf die Schwerkraftrichtung, wenn die Förderfläche horizontal ausgerichtet ist.

Damit die beiden Rahmenprofile während des Betriebes der Fördereinrichtung auch nicht vertikal beweglich sind, wird über eine Schraubverbindung den vertikal auf die Verbindung wirkenden Kräfte entgegen gewirkt. Die Schraubverbindung enthält hierzu eine vertikal von oben oder vertikal von unten durch die stirnseitigen Endabschnitte der Rahmenprofile geführte Verbindungsschraube.

Die Verbindungsschraube ist bevorzugt durch die obere Profilwand eines ersten Rahmenprofils und durch die untere Profilwand des zweiten Rahmenprofils, welche der oberen Profilwand gegenüber liegt, geführt und fixiert.

Die Verbindungsschraube kann durch ein im Profilhohlraum des ersten Rahmenprofils angebrachtes Stützelement geführt und an diesem, z. B. über den Schraubenkopf, abgestützt sein. Das Stützelement kann ein Plättchen sein. Das Stützelement kann sich quer, z. B. parallel zur oberen und unteren Profilwand, durch den Profilhohlraum erstrecken und jeweils mit einem Ende an einer seitlichen Profilwand befestigt sein. Das Stützelement kann über eine Kleb- Löt-, oder Schweissverbindung mit dem Rahmenprofil verbunden sein.

Die Verbindungsschraube kann, je nachdem, ob die Schraube von oben oder von unten eingeführt wird, in ein aussen oder innen an der unteren oder oberen Profilwand des zweiten Rahmenprofils angebrachtes Gewindeelement mit Innengewinde geführt und mit diesem verschraubt sein. Das Gewindeelement kann eine Schraubenmutter sein. Das Gewindeelement kann über eine Kleb- Löt-, oder Schweissverbindung mit dem Rahmenprofil verbunden sein.

Die beiden seitlichen Profilwände der beiden Rahmenprofile bilden jeweils im stirnseitigen Endabschnitt einen ersten Stirnkantenabschnitt und einen gegenüber dem ersten Stirnkantenabschnitt entlang der Profillängsachse zurückversetzten zweiten Stirnkantenabschnitt aus. Die genannten Stirnkantenabschnitte verlaufen bevorzugt von der oberen Profilwand in Richtung der unteren Profilwand bzw. umgekehrt.

Die Stirnkanten der beiden seitlichen Profilwände bilden quer zur Profillängsachse betrachtet im Bereich des Versatzes zwischen dem ersten und zweiten Stirnkantenabschnitt eine nutartige Vertiefung aus. Die nutartige Vertiefung geht in Richtung Profilende bevorzugt in einen zur oberen bzw. unteren Profilwand gerichteten Vorsprung über.

Zur Herstellung der Profilverbindung werden die Vorsprünge in die nutförmigen Vertiefungen des Gegenprofils eingeführt, wobei der Vorsprung am einen Rahmenprofil vertikal nach oben und der Vorsprung am anderen Rahmenprofil (Verbindungspartner) vertikal nach unten gerichtet ist.

Der Vorsprung hat in Kombination mit der nutförmigen Vertiefung die Funktion eines Hakens. Das eine Rahmenprofil wird dabei über den Vorsprung in die Vertiefung des Gegenprofils eingehängt.

So kann die Stirnkante der beiden seitlichen Profilwände quer zur Profillängsachse betrachtet im Bereich des Versatzes Z- bzw. S-förmig ausgestaltet sein.

Die Stirnkanten beider seitlichen Profilwände der beiden Rahmenprofile weisen bevorzugt dieselbe Geometrie auf.

Die Stirnkanten der seitlichen Profilwände der beiden Rahmenprofile im stirnseitigen Endabschnitt sind bevorzugt zueinander gegengleich ausgebildet, so dass sich die seitlichen Profilwände der beiden Rahmenprofile formschlüssig fügen lassen.

Gemäss einer Weiterbildung der Erfindung bildet die obere und/oder untere Profilwand des einen Rahmenprofils im stirnseitigen Endabschnitt mit ihrer Stirnkante einen entlang der Profillängsachse ausgerichteten Vorsprung aus.

Die korrespondierende obere und/oder untere Profilwand des anderen Rahmenprofils bildet im stirnseitigen Endabschnitt mit ihrer Stirnkante eine entlang der Profillängsachse ausgerichtete und zum Vorsprung korrespondierende Vertiefung aus. Der Vorsprung und die Vertiefung sind gegengleich ausgebildet, so dass sich die oberen und/oder unteren Profilwände der Rahmenprofile formschlüssig fügen lassen.

So kann das erste Rahmenprofil sowohl in der oberen als auch in der unteren Profilwand einen solchen Vorsprung aufweisen. Entsprechend weist das zweite Rahmenprofil sowohl in der oberen als auch in der unteren Profilwand eine korrespondierende Vertiefung auf.

Ferner kann das erste Rahmenprofil in der oberen Profilwand einen Vorsprung und in der unteren Profilwand eine Vertiefung aufweisen oder umgekehrt. Entsprechend weist das zweite Rahmenprofil in der oberen Profilwand eine korrespondierende Vertiefung und in der unteren Profilwand einen korrespondierenden Vorsprung auf oder umgekehrt.

Gemäss einer alternativen Weiterbildung der Erfindung enthält das eine Rahmenprofil im stirnseitigen Endabschnitt ein auf der Innenseite der oberen und/oder unteren Profilwand angeordnetes Führungselement, welches entlang der Profillängsachse der Stirnkante vorsteht. Das Führungselement kann ein Führungsplättchen sein. Das Führungselement kann an der Innenseite über eine Kleb-, Löt- oder Schweissverbindung mit der oberen bzw. unteren Profilwand verbunden sein.

Ferner kann im stirnseitigen Endabschnitt des einen Rahmenprofils auf der Innenseite der seitlichen Profilwände ein Seitenführungselement angebracht sein, welches der Stirnkante vorsteht. Das Seitenführungselement kann insbesondere im Bereich des Versatzes zwischen dem ersten und dem zweiten Stirnkantenabschnitt angeordnet sein. Das Seitenführungselement kann an der Innenseite über eine Kleb-, Löt- oder Schweissverbindung mit der seitlichen Profilwand verbunden sein.

Das von der Stirnkante vorstehenden Führungselement bzw. die von den Stirnkanten vorstehenden Seitenführungselemente greifen mit ihrem vorstehenden Abschnitt in den Profilhohlraum im Endabschnitt des Gegenprofils ein. Das Führungselement bzw. die Seitenführungselemente gleiten hierbei bevorzugt innenseitig entlang der Profilwände des Gegenprofils.

Gemäss einer bevorzugten Ausführung der Erfindung ist das eine Rahmenprofil zwischen zwei benachbarten Rahmenprofilen angeordnet und weist an beiden stirnseitigen Endabschnitten einen nach unten bzw. nach oben weisenden Vorsprung auf. Das Rahmenprofil ist folglich bezüglich einer Vertikalachse symmetrisch ausgebildet. Die stirnseitigen Endabschnitte der zu beiden Seiten angrenzenden Rahmenprofile weisen entsprechend einen nach oben bzw. nach unten weisenden Vorsprung auf. Das besagte Rahmenprofil kann folglich bei gelöster Schraubverbindung bei nach unten weisenden Vorsprüngen nach oben bzw. bei nach oben weisenden Vorsprüngen nach unten aus dem Rahmen entnommen werden.

Die Erfindung betrifft auch einen Bausatz nach Anspruch 8. Die Rahmenprofile sind als Hohlprofile ausgebildet und in ihrer Profillängsachse über stirnseitige Endabschnitte miteinander verbindbar.

Erfindungsgemäss sind Profilwände der beiden Rahmenprofile an ihren stirnseitigen Endabschnitten derart ausgestaltet, dass die beiden Rahmenprofile an ihren stirnseitigen Endabschnitten mindestens eine formschlüssige Verbindung ausbilden können, welche den längs, quer und vertikal auf die Verbindung wirkenden Kräfte entgegen wirkt.

Die im Zusammenhang mit der Fördereinrichtung offenbarten Weiterbildungen und Ausführungsformen von Rahmenprofilen bzw. deren Merkmale treffen auch auf die Rahmenprofile des Bausatzes zu.

Die Rahmenkonstruktion kann als Rahmenstruktur mit längslaufenden und querlaufenden Rahmenprofilen ausgebildet sein, welche das Förderorgan umgeben und dieses so seitlich einfassen. Die Rahmenkonstruktion kann insbesondere auch als Leiterrahmen mit Querstreben ausgebildet sein.

Die Fördereinrichtung kann der Förderung von Schüttgut oder Stückgut, wie ruhendes Gut oder sich selbst bewegbares Gut eingesetzt werden. Stückgüter können Waren oder Lebewesen, z. B. Personen, Tiere oder Pflanzen sein.

Die Fördereinrichtung kann z. B. als Fahrsteig oder Rollsteig ausgebildet sein. Fahr- bzw. Rollsteige finden z. B. Einsatz in Flughäfen, Einkaufszentren oder Bahnhöfen zur Beförderung von Personen über eine längere Strecke oder über verschiedene Ebenen. Die Fahr- bzw. Rollsteige können eine Länge von 50 bis 150m aufweisen.

Die erfindungsgemässe Fördereinrichtung findet insbesondere auch Verwendung als Werkermitfahrband. Mitfahrbänder werden in der industriellen Fertigung eingesetzt, in welcher Arbeitsschritte, wie Montagearbeiten, an sich vorbei bewegenden Objekten einer Fertigungsstrasse vorgenommen werden müssen. Um dem einzelnen Mitarbeiter genügend Zeit zur Durchführung seiner Arbeitsschritte am sich vorbei bewegenden Objekt zu verschaffen, wird der Mitarbeiter auf einem Werkermitfahrband parallel zum Objekt in Förderrichtung mitbewegt. Ein solches Werkermitfahrband kann eine Länge von einigen Metern, z. B. von 6-50 m aufweisen.

Die erfindungsgemässe Fördereinrichtung kann auch Verwendung finden als Fördereinrichtung zum Be- oder Entladen eines Laderaumes. Die Fördereinrichtung kann z. B. in einem Transportmittel wie Strassenfahrzeug, LKW, Schienenfahrzeug, z. B. Güterwagen, Wasserfahrzeug, z. B. Frachtschiff, oder Luftfahrzeug, z. B. Flugzeug, angeordnet sein. Ferner kann die Fördereinrichtung auch ausserhalb des Transportmittels angeordnet sein, wobei die Fracht über die Fördereinrichtung auf das Transportmittel gefördert wird.

Ferner kann die Laderaumfördereinrichtung auch in einem Fracht- oder Schiffscontainer zum Be- und Entladen des Containers Verwendung finden. Solche Container dienen dem Gütertransport auf der Strasse, der Schiene, in der Luft oder auf dem Wasser und werden entsprechend von Strassenfahrzeugen, Schienenfahrzeugen, Luftfahrzeugen oder Wasserfahrzeugen befördert.

Im Weiteren kann die erfindungsgemässe Fördereinrichtung auch Verwendung finden als Lagerraumfördereinrichtung in einem Lagersystem, insbesondere in einem Hochregallager. Das Lagersystem zeichnet sich insbesondere durch eine Mehrzahl von Palettenstellplätzen aus, wobei Transportpaletten mit Lagergut über die erfindungsgemässe Fördereinrichtung von oder zu den Lagerplätzen geförderten werden. Hier kann es zutreffen, dass die Fördereinrichtung von unten zugänglich sein muss. D.h., die Rahmenprofile müssen vertikal nach unten aus der Rahmenkonstruktion gelöste werden können.

Die durch das flächig ausgedehnte Förderorgan ausgebildete Förderfläche kann in eingebautem Zustand eben oder geneigt verlaufen. Das Förderorgan kann ein Förderband, ein Fördergurt oder ein Förderriemen sein. Das Förderorgan ist jedoch bevorzugt eine gegliederte Förderkette mit einer Förderfläche, wobei die Förderkette aus jeweils einzelnen, miteinander gelenkig verbundenen Kettengliedern besteht. Eine solche Förderkette kann z. B. eine flächig ausgedehnte Gliederkette, ein Modulband, eine Plattenkette, eine Modulbandkette oder eine Mattenkette sein. Die Förderkette kann auch eine Scharnierbandkette oder eine Plattenbandkette sein.

Im Folgenden wird der Erfindungsgegenstand anhand von bevorzugten Ausführungsbeispielen, welche in den beiliegenden Zeichnungen dargestellt sind, näher erläutert. Es zeigen jeweils schematisch:
- Figur 1:: eine perspektivische Darstellung eines Ausschnittes aus einer erfindungsgemässen Fördereinrichtung;
- Figur 2a-c:: eine erste Ausführungsform einer Profilverbindung für die Rahmenkonstruktion einer Fördereinrichtung nach Figur 1;
- Figur 3a-b:: eine zweite Ausführungsform einer Profilverbindung für die Rahmenkonstruktion einer Fördereinrichtung nach Figur 1.

Die erfindungsgemäße Fördereinrichtung wird durch die Merkmale des Anspruchs 1 und der erfindungsgemäße Bausatz durch die Merkmale des Anspruchs 8 definiert. Weitere Ausführungsformen der Erfindung ergeben sich aus den abhängigen Ansprüchen.

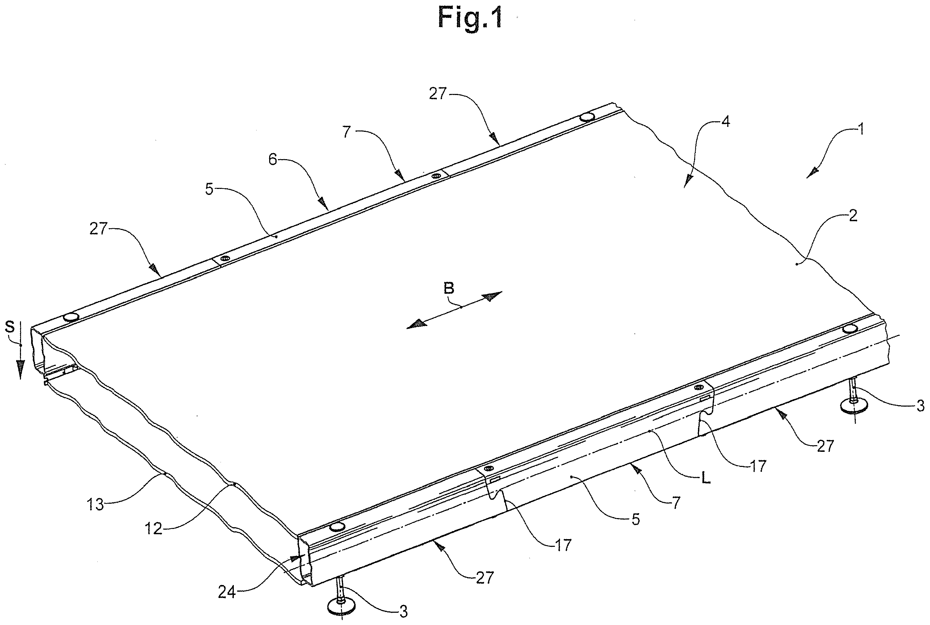

Die Fördereinrichtung 1 gemäss Figur 1 enthält eine Rahmenkonstruktion 6 mit beidseits eines flächig ausgedehnten, flexiblen Förderorgans 2 angeordneten Längsprofilen 5. Die Rahmenkonstruktion 6 dient unter anderem der seitlichen Einfassung des Förderorgans 2. Ferner bildet die Rahmenkonstruktion 6 einen Stützrahmen für einzelne oder sämtliche Komponenten der Fördereinrichtung 1. Diese können direkt oder indirekt auf der Rahmenkonstruktion 6 abgestützt bzw. an dieser befestigt sein. Solche Komponenten können z. B. Umlenkeinrichtungen für das Förderorgan 2 an den Kopfenden der Fördereinrichtung 1, eine Antriebsvorrichtung, oder eine Abstützstruktur für das Förderorgan 2 sein.

Das Förderorgan 2 weist einen oberen Trum 12 auf, welcher die Förderfläche 4 ausbildet. Ferner weist das Förderorgan 2 einen unteren Trum 13 auf. Der untere Trum 13 stellt die Rückführung des Förderorgans 2 entgegen der Förderrichtung B sicher.

Die Rahmenkonstruktion 6 und über diese die Fördereinrichtung 1 ist gemäss dem vorliegenden Ausführungsbeispiel über Stützfüsse 3 zum Untergrund hin abgestützt. Die Stützfüsse 3 dienen auch zum Nivellieren der Fördereinrichtung 1.

Die Längsprofile 5 der Rahmenkonstruktion 6, welche sich parallel zur Förderrichtung B des Förderorgans 2 erstrecken, setzen sich aus mehreren Rahmenprofile 7, 27; 57, 77 zusammen, welche in ihrer Profillängsachse L über stirnseitige Endabschnitte 8, 28; 58, 78 miteinander verbunden sind. Die Rahmenprofile 7, 27; 57, 77 sind als Hohlprofile ausgebildet.

Die beiden seitlichen Profilwände 11 der beiden Rahmenprofile 7, 27; 57, 77 bilden jeweils im stirnseitigen Endabschnitt 8, 28; 58, 78 einen ersten Stirnkantenabschnitt 17a und einen gegenüber dem ersten Stirnkantenabschnitt 17a entlang der Profillängsachse L zurückversetzten zweiten Stirnkantenabschnitt 17b aus. Die genannten Stirnkantenabschnitte 17a, 17b verlaufen von der oberen Profilwand 9 in Richtung der unteren Profilwand 10 bzw. umgekehrt.

Die Stirnkanten 17 der seitlichen Profilwände 11 bilden quer zur Profillängsachse L betrachtet im Bereich des Versatzes zwischen dem ersten und zweiten Stirnkantenabschnitt 17a, 17b eine nutartige Vertiefung 18 aus. Die nutartige Vertiefung 18 geht in Richtung Profilende in einen zur oberen bzw. unteren Profilwand 9, 10 gerichteten Vorsprung 22 über.

Die Stirnkante 17 der seitlichen Profilwände 11 ist quer zur Profillängsachse L betrachtet im Bereich des Versatzes je nach Betrachtungswinkel Z- oder S-förmig ausgestaltet.

Die Stirnkanten 17 der seitlichen Profilwände 11 der beiden Rahmenprofile 7, 27; 57, 77 sind im stirnseitigen Endabschnitt 8, 28; 58, 78 zueinander gegengleich ausgebildet, so dass sich die seitlichen Profilwände 11 der Rahmenprofile 7, 27; 57, 77 formschlüssig fügen lassen.

Zur Herstellung der Profilverbindung werden die Vorsprünge 22 in die nutförmigen Vertiefungen 18 des Gegenprofils eingeführt. Hierzu wird jenes Rahmenprofil 7, 57, dessen Vorsprünge 22 in Richtung der unteren Profilwand 10 weist, von oben nach unten in Richtung jenes Rahmenprofils 27, 77 bewegt, dessen Vorsprung 22 in Richtung der oberen Profilwand 9 weist.

Durch die oben beschriebene Geometrie der Stirnkanten 17 der seitlichen Profilwände 11 wirkt die Verbindung der Rahmenprofile 7, 27; 57, 77 längs, d.h. in Profillängsrichtung L, wirkenden Kräften entgegen.

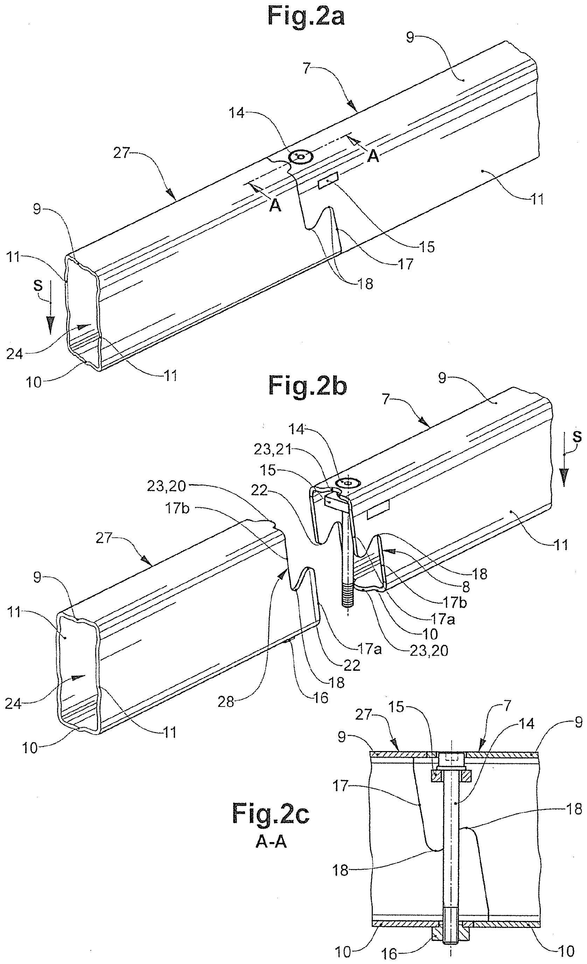

Gemäss einer ersten Weiterbildung der Erfindung gemäss Figur 2a bis 2c bildet die obere Profilwand 9 des einen Rahmenprofils 27 im stirnseitigen Endabschnitt 28 mit ihrer Stirnkante 23 in der Profillängsachse L einen Vorsprung 20 aus. Die obere Profilwand 9 des anderen Rahmenprofils 7 bildet im stirnseitigen Endabschnitt 8 mit ihrer Stirnkante 23 in der Profillängsachse L eine zum Vorsprung 20 korrespondierende Vertiefung 21 aus.

Ferner bildet die untere Profilwand 10 des einen Rahmenprofils 27 im stirnseitigen Endabschnitt 28 mit ihrer Stirnkante 23 in der Profillängsachse L eine Vertiefung 20 aus. Die untere Profilwand 10 des anderen Rahmenprofils 7 bildet im stirnseitigen Endabschnitt 8 mit ihrer Stirnkante 23 in der Profillängsachse L einen zur Vertiefung 21 korrespondierenden Vorsprung 20 aus.

Der Vorsprung und die Vertiefung sind gegengleich ausgebildet, so dass sich die oberen und unteren Profilwände 9, 10 der Rahmenprofile 7, 27 formschlüssig fügen lassen.

Durch die oben beschriebene Geometrie der Stirnkanten 23 der oberen und unteren Profilwände 9, 10 wirkt die Verbindung der Rahmenprofile 7, 27 quer (Profilquerrichtung), d.h. quer zur Profillängsrichtung L und parallel zur oberen und unteren Profilwand 9, 10 wirkenden Kräften entgegen.

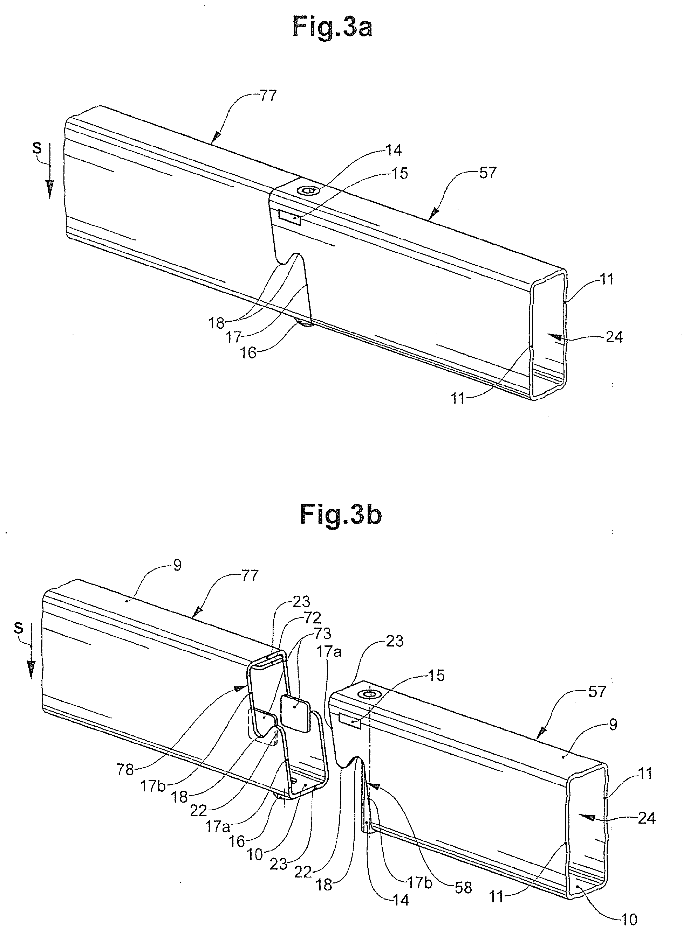

Gemäss einer zweiten Weiterbildung der Erfindung gemäss Figur 3a und 3b enthält das eine Rahmenprofil 77 im stirnseitigen Endabschnitt 78 ein auf der Innenseite der oberen Profilwand 9 angeordnetes Führungsplättchen 72, welches entlang der Profillängsachse L der Stirnkante 23 vorsteht. Das Führungsplättchen 72 ist an der Innenseite über eine Schweissverbindung mit der oberen Profilwand 9 verbunden.

Im Weiteren ist im stirnseitigen Endabschnitt 78 desselben Rahmenprofils 77 auf der Innenseite der seitlichen Profilwände 11 im Bereich des Versatzes jeweils ein Seitenführungsplättchen 73 angebracht, welches der Stirnkante 17 vorsteht. Das jeweilige Seitenführungsplättchen 73 ist an der Innenseite über eine Schweissverbindung mit der seitlichen Profilwand 11 verbunden.

Das von der Stirnkante 23 vorstehende Führungsplättchen 72 und die von den Stirnkanten 17 vorstehenden Seitenführungsplättchen 73 greifen mit ihrem vorstehenden Abschnitt im Bereich des Endabschnittes 58 in den Profilhohlraum des Gegenprofils 57 ein. Das Führungselement 72 bzw. die Seitenführungselemente 73 gleiten hierbei bevorzugt innenseitig entlang der Profilwände 9, 11 des Gegenprofils 57.

Durch die oben beschriebenen Führungsplättchen 72 bzw. Seiteführungsplättchen 73 wirkt die Verbindung der Rahmenprofile 77, 57 quer, d.h. quer zur Profillängsrichtung L und parallel zur oberen und unteren Profilwand 9, 10 wirkenden Kräften entgegen.

Der stirnseitige Endabschnitt 8, 28; 58, 78 des ersten Rahmenprofils 7, 57 zur Herstellung der Verbindung mit dem zweiten Rahmenprofil 27, 77 ist nun identisch zum stirnseitigen Endabschnitt 8, 28; 58, 78 des zweiten Rahmenprofils 27, 77 ausgebildet, welcher nicht mit dem ersten Rahmenprofil 7, 57 verbunden wird.

Entsprechend ist der stirnseitige Endabschnitt 8, 28; 58, 78 des zweiten Rahmenprofils 27, 77 zur Herstellung der Verbindung mit dem ersten Rahmenprofil 7, 57 identisch zum stirnseitigen Endabschnitt 8, 28; 58, 78 des ersten Rahmenprofils 7, 57 ausgebildet, welcher nicht mit dem zweiten Rahmenprofil 27, 77 verbunden wird.

Auf diese Weise lassen sich beliebig viele Rahmenprofile 7, 27; 57, 77 in Profillängsrichtung L hintereinander über ihre stirnseitigen Endabschnitte 8, 28; 58, 78 formschlüssig miteinander verbinden. Entsprechend lassen sich mit den beschriebenen Rahmenprofile 7, 27; 57, 77 Fördereinrichtungen 1 von unterschiedlicher Baulänge herstellen.

Damit nun die beiden Rahmenprofile 7, 27; 57, 77 während des Betriebes der Fördereinrichtung 1 auch nicht vertikal nach oben beweglich sind, d.h. senkrecht zur Profillängsrichtung und senkrecht zur Profilquerrichtung, sind diese über eine Schraubverbindung gegeneinander gesichert. Die Schraubverbindung enthält hierzu eine von oben durch die stirnseitigen Endabschnitte 8, 28; 58, 78 der Rahmenprofile 7, 27; 57, 77 geführte Verbindungsschraube 14.

Die Verbindungsschraube 14 ist durch die obere Profilwand 9 des ersten Rahmenprofils 7, 57 und durch die untere Profilwand 10 des zweiten Rahmenprofils 27, 77 geführt.

Die Verbindungsschraube 14 ist ferner durch ein im Profilhohlraum 24 angebrachtes Stützplättchen 15 geführt und über den Schraubenkopf auf diesem abgestützt. Das Stützplättchen 15 erstrecht sich quer im Profilhohlraum 24 und ist jeweils mit einem Ende an einer seitlichen Profilwand 11 mittels Schweissverbindung befestigt.

Die Verbindungsschraube 14 ist im Weiteren in eine aussen an der unteren Profilwand 10 mittels Schweissverbindung angebrachte Schraubenmutter 16 geführt und mit dieser verschraubt.

Durch die oben beschriebene Schraubverbindung wirkt die Verbindung der Rahmenprofile 7, 27; 57, 77 während des Betriebs der Fördereinrichtung den vertikal nach oben wirkenden Kräfte entgegen.

Soll nun eine Verbindung zwischen zwei Rahmenprofile 7, 57; 27, 77 hergestellt werden, so wird jenes Rahmenprofil 7, 57, dessen Vorsprung 22 zur unteren Profilwand 10 gerichtet ist, durch eine Bewegung nach unten in Richtung des anderen Rahmenprofils 27, 77 abgesenkt, wodurch die Rahmenprofile 7, 57; 27, 77 mit ihren Stirnkanten 23, 17 eine formschlüssige Verbindung eingehen.

Diese Arte der Montage ist vor allem in jenen Fällen von Vorteil, in welchen die Fördereinrichtung 1 z. B. im Boden versenkt ist und daher lediglich eine Zugänglichkeit von oben gewährleistet ist.

Soll nun die Verbindung gelöst und die beiden Rahmenprofile 7, 57; 27, 77 voneinander getrennt werden, so wird in einem ersten Schritt die Schraubverbindung gelöst. Jenes Rahmenprofil 7, 57, dessen Vorsprung 22 zur unteren Profilwand 10 gerichtet ist, kann nun, sofern dieses mit seinem anderen Endabschnitt nicht in Verbindung mit einem weiteren Rahmenprofil steht, durch eine Bewegung nach oben angehoben und aus der Rahmenkonstruktion gelöst werden.

## Patentansprüche

1. Fördereinrichtung (1), enthaltend:
- ein umlaufendes, flächig ausgedehntes Förderorgan (2);
- eine Rahmenkonstruktion (6) mit einer Mehrzahl von Rahmenprofilen (7, 27; 57, 77) zur seitlichen Einfassung des Förderorgans (2),
wobei wenigstens zwei Rahmenprofile (7, 27; 57, 77) der Rahmenkonstruktion (6) als seitliche Längsprofile ausgebildet sind, welche parallel zur Förderrichtung des Förderorgans verlaufen, und welche in ihrer Profillängsachse (L) über stirnseitige Endabschnitte (8, 28; 58, 78) miteinander verbunden sind, und die wenigstens zwei Rahmenprofile (7, 27; 57, 77) als Hohlprofile ausgebildet sind,
**dadurch gekennzeichnet, dass**
die Rahmenhohlprofile (7, 27; 57, 77) an ihren stirnseitigen Endabschnitten (8, 28) eine formschlüssige Verbindung ausbilden, welche längs, quer und vertikal auf die Verbindung wirkenden Kräfte entgegen wirkt, wobei zum Entgegenwirken von längs auf die Verbindung wirkenden Kräften:
zwei seitliche Profilwände (11) der Rahmenhohlprofile (7, 27; 57, 77) jeweils im stirnseitigen Endabschnitt (8, 28; 58, 78) eine Stirnkante mit einem ersten Stirnkantenabschnitt (17a) und einen gegenüber dem ersten Stirnkantenabschnitt (17a) entlang der Profillängsachse (L) einen Versatz aufweisenden, zweiten Stirnkantenabschnitt (17b) ausbilden,
und die Stirnkanten (17) der zwei seitlichen Profilwände (11) der Rahmenhohlprofile (7, 27; 57, 77) quer zur Profillängsachse (L) betrachtet im Bereich des Versatzes zwischen dem ersten und zweiten Stirnkantenabschnitt (17a, 17b) eine nutartige Vertiefung (18) ausbilden, welche in Richtung Profilende in einen zu einer oberen oder unteren Profilwand gerichteten Vorsprung (22) übergeht, und
der Vorsprung (22) in Kombination mit der nutförmigen Vertiefung (18) die Funktion eines Hakens hat, wobei der Vorsprung (22) am einen Rahmenprofil (7, 27; 57, 77) vertikal nach oben und der Vorsprung (22) am Gegenprofil (7, 27; 57, 77) vertikal nach unten gerichtet ist,
wobei das eine Rahmenprofil (7, 27; 57, 77) über
den Vorsprung (22) in die Vertiefung des Gegenprofils (7, 27; 57, 77) eingehängt ist, und
zum Entgegenwirken von quer auf die Verbindung wirkenden Kräften:
die obere und/oder untere Profilwand (9, 10) des einen Rahmenprofils (27) im stirnseitigen Endabschnitt (28) mit ihrer Stirnkante (23) einen entlang der Profillängsachse (L) ausgerichteten Vorsprung (20) ausbildet und die korrespondierende obere und/oder untere Profilwand (9, 10) des anderen Rahmenprofils (7) im stirnseitigen Endabschnitt (8) mit ihrer Stirnkante (23) eine entlang der Profillängsachse (L) ausgerichtete und zum Vorsprung (20) korrespondierende Vertiefung (21) ausbildet, wobei der Vorsprung (20) und die Vertiefung (21) gegengleich ausgebildet sind, so dass die oberen und/oder unteren Profilwände (9, 10) der Rahmenprofile (7, 27) formschlüssig gefügt sind,
oder das eine Rahmenprofil (77) im stirnseitigen Endabschnitt (78) ein auf der Innenseite der oberen und/oder unteren Profilwand (9, 10) angeordnetes Führungselement (72) enthält, welches entlang der Profillängsachse (L) der Stirnkante (23) vorsteht,
oder das eine Rahmenprofil (77) im stirnseitigen Endabschnitt (78) ein auf der Innenseite der seitlichen Profilwände (11) angebrachtes Seitenführungselement (73) umfasst, welches der Stirnkante (17) vorsteht,
wobei das von der Stirnkante (23) vorstehenden Führungselement (72) bzw. die von den Stirnkanten (17) vorstehenden Seitenführungselemente (73) mit ihrem vorstehenden Abschnitt in den Profilhohlraum im Endabschnitt des Gegenprofils (57) eingreifen, und
zum Entgegenwirken von vertikal nach oben und vertikal nach unten auf die Verbindung wirkenden Kräften:
die Rahmenhohlprofile (7, 27; 57, 77) über eine Schraubverbindung mit einer vertikal von oben oder vertikal von unten durch die stirnseitigen Endabschnitte der Rahmenhohlprofile geführte Verbindungsschraube (14) miteinander verbunden sind.

2. Fördereinrichtung gemäss Anspruch 1, **dadurch gekennzeichnet, dass** die seitlichen Profilwände (9, 10, 11) der Rahmenhohlprofile (7, 27; 57, 77) an ihren stirnseitigen Endabschnitten (8, 28), derart ausgestaltet sind, dass eines der Rahmenhohlprofile (7, 57) bei gelöster Schraubverbindung vertikal nach oben oder vertikal nach unten bewegbar ist und in der Gegenrichtung am anderen Rahmenhohlprofil (27, 77) ansteht.

3. Fördereinrichtung gemäss Anspruch 1 oder 2, **dadurch gekennzeichnet, dass** die Verbindungsschraube (14) durch die obere Profilwand (9) des ersten Rahmenhohlprofils (7, 57) und durch die untere Profilwand (10) des zweiten Rahmenhohlprofils (27, 77) geführt und fixiert ist.

4. Fördereinrichtung gemäss einem der Ansprüche 1 bis 3, **dadurch gekennzeichnet, dass** die Verbindungsschraube (14) durch ein im Profilhohlraum (24) angebrachtes Stützelement (15) geführt und an diesem abgestützt ist.

5. Fördereinrichtung gemäss einem der Ansprüche 1 bis 4, **dadurch gekennzeichnet, dass** die Verbindungsschraube (14) in ein aussen oder innen an der unteren oder oberen Profilwand (10) angebrachtes Gewindeelement (16) geführt und mit diesem verschraubt ist.

6. Fördereinrichtung gemäss einem der Ansprüche 1 bis 5, **dadurch gekennzeichnet, dass** die Stirnkante (17) der beiden seitlichen Profilwände (11) der Rahmenhohlprofile (7, 27; 57, 77) quer zur Profillängsachse (L) betrachtet im Bereich des Versatzes Z- oder S-förmig ausgestaltet ist.

7. Fördereinrichtung gemäss einem der Ansprüche 1 bis 6, **dadurch gekennzeichnet, dass** die Stirnkanten (17) der seitlichen Profilwände (11) der Rahmenhohlprofile (7, 27; 57, 77) im stirnseitigen Endabschnitt (8, 28; 58, 78) zueinander gegengleich ausgebildet sind, so dass sich die seitlichen Profilwände (11) der Rahmenhohlprofile (7, 27) formschlüssig fügen lassen.

8. Bausatz mit wenigstens zwei Rahmenprofilen (7, 27) zur Erstellung einer Rahmenkonstruktion (6) für eine Fördereinrichtung nach einem der Ansprüche 1 bis 7, wobei die Rahmenhohlprofile (7, 27) als seitliche Längsprofile ausgebildet sind und in ihrer Profillängsachse (L) über stirnseitige Endabschnitte (8, 28; 58, 78) miteinander verbindbar sind, und die wenigstens zwei Rahmenprofile (7, 27) Hohlprofile sind,
**dadurch gekennzeichnet, dass**
die Rahmenhohlprofile (7, 27; 57, 77) an ihren stirnseitigen Endabschnitten (8, 28, 58, 78) eine formschlüssige Verbindung ausbilden, welche längs, quer und vertikal auf die Verbindung wirkenden Kräfte entgegen wirkt, wobei zum Entgegenwirken von längs auf die Verbindung wirkenden Kräften:
zwei seitliche Profilwände (11) der Rahmenhohlprofile (7, 27; 57, 77) jeweils im stirnseitigen Endabschnitt (8, 28; 58, 78) eine Stirnkante mit einem ersten Stirnkantenabschnitt (17a) und einen gegenüber dem ersten Stirnkantenabschnitt (17a) entlang der Profillängsachse (L) einen Versatz aufweisenden, zweiten Stirnkantenabschnitt (17b) ausbilden,
und die Stirnkanten (17) der zwei seitlichen Profilwände (11) der Rahmenhohlprofile (7, 27; 57, 77) quer zur Profillängsachse (L) betrachtet im Bereich des Versatzes zwischen dem ersten und zweiten Stirnkantenabschnitt (17a, 17b) eine nutartige Vertiefung (18) ausbilden, welche in Richtung Profilende in einen zu einer oberen oder unteren Profilwand gerichteten Vorsprung (22) übergeht, und der Vorsprung (22) in Kombination mit der nutförmigen Vertiefung (18) die Funktion eines Hakens hat, wobei der Vorsprung (22) am einen Rahmenprofil (7, 27; 57, 77) vertikal nach oben und der Vorsprung (22) am Gegenprofil (7, 27; 57, 77) vertikal nach unten gerichtet ist,
wobei das eine Rahmenprofil (7, 27; 57, 77) über
den Vorsprung (22) in die Vertiefung des Gegenprofils (7, 27; 57, 77) eingehängt werden kann, und
zum Entgegenwirken von quer auf die Verbindung wirkenden Kräften:
die obere und/oder untere Profilwand (9, 10) des einen Rahmenprofils (27) im stirnseitigen Endabschnitt (28) mit ihrer Stirnkante (23) einen entlang der Profillängsachse (L) ausgerichteten Vorsprung (20) ausbildet und die korrespondierende obere und/oder untere Profilwand (9, 10) des anderen Rahmenprofils (7) im stirnseitigen Endabschnitt (8) mit ihrer Stirnkante (23) eine entlang der Profillängsachse (L) ausgerichtete und zum Vorsprung (20) korrespondierende Vertiefung (21) ausbildet, wobei der Vorsprung (20) und die Vertiefung (21) gegengleich ausgebildet sind, so dass die oberen und/oder unteren Profilwände (9, 10) der Rahmenprofile (7, 27; 57, 77) formschlüssig fügbar sind,
oder das eine Rahmenprofil (77) im stirnseitigen Endabschnitt (78) ein auf der Innenseite der oberen und/oder unteren Profilwand (9, 10) angeordnetes Führungselement (72) enthält, welches entlang der Profillängsachse (L) der Stirnkante (23) vorsteht,
oder das eine Rahmenprofil (77) im stirnseitigen Endabschnitt (78) ein auf der Innenseite der seitlichen Profilwände (11) angebrachtes Seitenführungselement (73) umfasst, welches der Stirnkante (17) vorsteht,
wobei das von der Stirnkante (23) vorstehenden Führungselement (72) bzw. die von den Stirnkanten (17) vorstehenden Seitenführungselemente (73) mit ihrem vorstehenden Abschnitt in den Profilhohlraum im Endabschnitt des Gegenprofils (57) eingreifen, und
zum Entgegenwirken von vertikal nach oben und vertikal nach unten auf die Verbindung wirkenden Kräften:
die Rahmenhohlprofile (7, 27; 57, 77) an ihren stirnseitigen Endabschnitten (8, 28) mittels einer Schraubverbindung mit einer vertikal von oben oder vertikal von unten durch die stirnseitigen Endabschnitte der Rahmenhohlprofile führbaren Verbindungsschraube (14) verbindbar sind.

9. Verwendung der Fördereinrichtung (1) nach einem der Ansprüche 1 bis 7:
- als Werkermitfahrband;
- als Lagerraumfördereinrichtung oder
- zum Be- und Entladen eines Laderaumes.

## Claims

1. A conveying device (1), comprising:
- a revolving, extensively extended conveying element (2);
- a frame construction (6) with a plurality of frame profiles (7, 27; 57, 77) for the lateral enclosure of the conveying element (2),
wherein at least two frame profiles (7, 27; 57, 77) of the frame construction (6) are designed as lateral longitudinal profiles which run parallel to the conveying direction of the conveying element, and which in their profile longitudinal axis (L) are connected to one another via face-side end sections (8, 28; 58, 78), and the at least two frame profiles (7, 27; 57, 77) are designed as hollow profiles,
**characterised in that**,
the hollow frame profiles (7, 27; 57, 77) at their face-side end sections (8, 28) form a positive-fit connection, which counteracts forces acting longitudinally, transversely and vertically onto the connection, wherein
for counteracting forces which act longitudinally onto the connection:
two lateral profile walls (11) of the hollow frame profiles (7, 27; 57, 77) in each case at their face-side end section (8, 28; 58, 78) form a face edge (17) with a first face edge section (17a) and a second face edge section (17b) which has an offset with respect to the first face edge section (17a) along the profile longitudinal axis (L),
and the face edges (17) of the two lateral profile walls (11) of the hollow frame profiles (7, 27; 57, 77) considered transversely to the profile longitudinal axis (L) form a groove-like recess (18) in the region of the offset between the first and the second face edge section (17a, 17b), which in the direction of the profile end merges into a projection (22) directed to an upper or lower profile wall, and
the projection (22) in combination with the groove-like recess (18) has the function of a hook, wherein the projection (22) on one frame profile (7, 27; 57, 77) is directed vertically upwards and the projection (22) on the counter-profile (7, 27; 57, 77) is directed vertically downwards, wherein the one frame profile (7, 27; 57,77) is hung into the recess of the counter-profile (7, 27; 57, 77) via the projection (22), and
for counteracting forces which act transversely onto the connection:
the upper and/or the lower profile wall (9, 10) of the one frame profile (27) in the face-side end section (28) with its face edge (23) forms a projection (20) which is aligned along the profile longitudinal axis (L),
and the corresponding upper and/or lower profile wall (9, 10) of the other frame profile (7), in the face-side end section (8) with its face-edge (23) forms a recess (21) which corresponds to the projection (20) and which is aligned along the profile longitudinal axis (L), wherein the projection (20) and the recess (21) are designed in a manner equal and opposite to one another, so that the upper and/or lower profile walls (9, 10) of the frame profiles (7, 27) are joined with a positive fit,
or the one frame profile (77) in the face-side end section (78) contains a guidance element (72) which is arranged on the inner side of the upper and/or lower profile wall (9, 10), which projects beyond the face edge (23) along the the profile longitudinal axis (L),
or the one frame profile (77) in the face-side end section (78) comprises a side guidance element (73) which is attached on the inner side of the lateral profile walls (11) and which projects beyond the face edge (17),
wherein the guide element (72) which projects from the face edge (23) or the side guidance elements (73) which project from the face edges (17), with their projecting section engage into the profile cavity in the end section of the counter-profile and
for counteracting forces which act vertically upwards and vertically downwards onto the connection:
the hollow frame profiles (7, 27; 57, 77) are connected to one another via a screw connection with a connection screw (14) which is led vertically from above or vertically from below through the face-side end sections (8, 28) of the hollow frame profiles.

2. A conveying device according to claim 1, **characterised in that** the lateral profile walls (9, 10, 11) of the hollow frame profiles (7, 27; 57,77) at their face-side end sections (8, 28) are designed in a manner such that one of the hollow frame profiles (7, 57), when the screw connection is released, is movable vertically upwards or vertically downwards and abuts on the other hollow frame profile (27, 77) in the opposite direction.

3. A conveying device according to claim 1 or 2, **characterised in that** the connection screw (14) is led through the upper profile wall (9) of the first hollow frame profile (7, 57) and through the lower profile wall (10) of the second hollow frame profile (27, 77), and fixed.

4. A conveying device according to one of the claims 1 to 3, **characterised in that** the connection screw (14) is led through a support element (15) attached in the profile cavity (24) and is supported on this support element.

5. A conveying device according to one of the claims 1 to 4, **characterised in that** the connection screw (14) is led into a thread element (16) attached at the outside or inside on the lower or upper profile wall (10) and is screwed to this thread element.

6. A conveying device according to one of the claims 1 to 5, **characterised in that** the face edge (17) of the two lateral profile walls (11) of the hollow frame profiles (7, 27; 57, 77) considered transversely to the profile longitudinal axis (L) is designed in a Z-shaped or S-shaped manner in the region of the offset.

7. A conveying device according to one of the claims 1 to 6, **characterised in that** the face edges (17) of the lateral profile walls (11) of the hollow frame profiles (7, 27; 57, 77) in the face-side end section (8, 28; 58, 78) are designed in a manner equal and opposite to one another, so that the lateral profile walls (11) of the hollow frame profiles (7, 27) can be joined with a positive fit.

8. A kit with at least two frame profiles (7, 27) for creating a frame construction (6) for a conveying device according to one of the claims 1 to 7, wherein the hollow frame profiles (7, 27) are designed as lateral longitudinal profiles and in their profile longitudinal axis (L) can be connected to one another via face-side end sections (8, 28; 58, 78), and the at least two frame profiles (7, 27,77) are designed as hollow profiles,
**characterised in that**,
the hollow frame profiles (7, 27; 57, 77) at their face-side end sections (8, 28; 58, 78) form a positive-fit connection, which counteracts forces acting longitudinally, transversely and vertically onto the connection, wherein
for counteracting forces which act longitudinally onto the connection:
two lateral profile walls (11) of the hollow frame profiles (7, 27; 57, 77) in each case form a face edge with a first face edge section (17a) and a second face edge section (17b) which has an offset with respect to the first face edge section (17a) along the profile longitudinal axis (L), and the face edges (17) of the two lateral profile walls (11) of the hollow frame profiles (7, 27; 57, 77) considered transversely to the profile longitudinal axis (L) form a groove-like recess (18) in the region of the offset between the first and the second face edge section (17a, 17b), which in the direction of the profile end merges into a projection (22) directed to the upper or lower profile wall,
and the projection (22) in combination with the groove-like recess (18) has the function of a hook, wherein the projection (22) on one frame profile (7, 27; 57, 77) is directed vertically upwards and the projection (22) on the counter-profile (7, 27; 57, 77) is directed vertically downwards,
wherein the one frame profile (7, 27; 57,77) can be hung into the recess of the counter-profile (7, 27; 57, 77) via the projection (22), and
for counteracting forces which act transversely onto the connection:
the upper and/or the lower profile wall (9, 10) of the one frame profile (27) in the face-side end section (28) with its face edge (23) forms a projection (20) which is aligned along the profile longitudinal axis (L),
and the corresponding upper and/or lower profile wall (9, 10) of the other frame profile (7), in the face-side end section (8) with its face-edge (23) forms a recess (21) which corresponds to the projection (20) and which is aligned along the profile longitudinal axis (L), wherein the projection (20) and the recess (21) are designed in a manner equal and opposite to one another, so that the upper and/or lower profile walls (9, 10) of the frame profiles (7, 27; 57, 77) can be joined with a positive fit,
or the one frame profile (77) in the face-side end section (78) contains a guidance element (72) which is arranged on the inner side of the upper and/or lower profile wall (9, 10), which projects beyond the face edge (23) along the the profile longitudinal axis (L),
or the one frame profile (77) in the face-side end section (78) comprises a side guidance element (73) which is attached on the inner side of the lateral profile walls (11), which projects beyond the face edge (17),
wherein the guide element (72) which projects from the face edge (23) or the side guidance elements (73) which project from the face edges (17), with their projecting section engage into the profile cavity in the end section of the counter-profile, and
for counteracting forces which act vertically upwards and vertically downwards, onto the connection:
the hollow frame profiles (7, 27; 57, 77) at their face-side end sections (8, 28) can be connected via a screw connection with a connection screw (14) which is led vertically from above or vertically from below through the face-side end sections of the frame profiles.

9. The use of the conveying device (1) according to one of the claims 1 to 7
- as a worker-rider belt;
- storage space conveying device or
- for loading and unloading a storage space.

## Revendications

1. Dispositif de transport (1) contenant :
un organe de transport (2) aplati et s'étendant en boucle fermée,
une structure d'encadrement (6) présentant plusieurs profilés d'encadrement (7, 27; 57, 77) permettant de saisir latéralement l'organe de transport (2),
au moins deux profilés d'encadrement (7, 27; 57, 77) de la structure d'encadrement (6) étant configurés sous la forme de profilés latéraux allongés qui s'étendent parallèlement à la direction de transport de l'organe de transport et reliés les uns aux autres suivant leur axe longitudinal (L) de profilé par des sections frontales d'extrémité (8, 28; 58, 78), les deux ou plusieurs profilés d'encadrement (7, 27; 57, 77) étant configurés comme profilés creux,
**caractérisé en ce que**
les profilés creux d'encadrement (7, 27; 57, 77) forment sur leur section frontale d'extrémité (8, 28) une liaison en correspondance géométrique qui s'oppose aux forces agissant longitudinalement, transversalement et verticalement sur la liaison,
**en ce que** pour s'opposer aux forces agissant longitudinalement sur la liaison :
deux parois latérales (11) des profilés creux d'encadrement (7, 27; 57, 77) forment chacune dans la section frontale d'extrémité (8, 28; 58, 78) un bord frontal présentant une première section (17a) de bord frontal et une deuxième section (17b) de bord frontal présentant un décalage par rapport à la première section (17a) de bord frontal le long de l'axe longitudinal (L) du profilé,
et **en ce qu'**au niveau du décalage entre la première section et la deuxième section de bord frontal (17a, 17b), les bords frontaux (17) des deux parois latérales (11) des profilés creux d'encadrement (7, 27; 57, 77) forment transversalement par rapport à l'axe longitudinal (L) de profilé un creux (18) en forme de rainure qui se prolonge en direction de l'extrémité du profilé en une saillie (22) orientée vers une paroi supérieure ou une paroi inférieure du profilé,
**en ce que** la saillie (22) possède la fonction d'un crochet en combinaison avec le creux (18) en forme de rainure,
**en ce que** la saillie (22) est orientée verticalement vers le haut sur un profilé d'encadrement (7, 27; 57, 77) et la saillie (22) est orientée verticalement vers le bas sur un profilé d'encadrement (7, 27; 57, 77) complémentaire,
**en ce qu'**un profilé d'encadrement (7, 27; 57, 77) est suspendu par l'intermédiaire de la saillie (22) dans le creux du profilé (7, 27; 57, 77) complémentaire, et
**en ce que** pour s'opposer aux forces agissant transversalement sur la liaison :
par son bord frontal (23), la paroi supérieure et/ou la paroi inférieure (9, 10) d'un des profilés d'encadrement (27) forme dans la section frontale d'extrémité (28) une saillie (20) orientée le long de l'axe longitudinal (L) du profilé et par son bord frontal (23), la paroi supérieure et/ou la paroi inférieure (9, 10) complémentaires de l'autre profilé d'encadrement (7) forme dans la section frontale d'extrémité (8) un creux (21) orienté suivant l'axe longitudinal (L) du profilé et correspondant à la saillie (20), la saillie (20) et le creux (21) ayant des configurations complémentaires de telle sorte que les parois supérieures et/ou les parois inférieures (9, 10) des profilés d'encadrement (7, 27) sont reliées en correspondance géométrique ou
**en ce que** dans la section frontale d'extrémité (78), un profilé d'encadrement (77) contient un élément de guidage (72) disposé sur le côté intérieur de la paroi supérieure et/ou de la paroi inférieure (9, 10) du profilé et qui déborde du bord frontal (23) suivant l'axe longitudinal (L) du profilé ou
en ce dans la section frontale d'extrémité (78), un profilé d'encadrement (77) comporte un élément (73) de guidage latéral placé à l'intérieur des parois latérales (11) du profilé et qui déborde du bord frontal (17),
**en ce que** l'élément de guidage (72) qui déborde du bord frontal (23) ou les éléments de guidage latéral (73) qui débordent des bords frontaux (17) engagent par leur section en débord la cavité profilée de la section d'extrémité du profilé complémentaire (57), et
**en ce que** pour s'opposer aux forces agissant verticalement vers le haut et verticalement vers le bas sur la liaison :
les profilés creux d'encadrement (7, 27; 57, 77) sont reliés les uns aux autres par une liaison filetée à l'aide d'une vis de liaison (14), verticalement depuis le haut ou verticalement depuis le bas à travers les sections frontales d'extrémité des profilés creux d'encadrement.

2. Ensemble de transport selon la revendication 1, **caractérisé en ce que** les parois profilées latérales (9, 10, 11) des profilés creux d'encadrement (7, 27; 57, 77) sont configurées sur leur section frontale d'extrémité (8, 28) de manière à ce que l'un des profilés creux d'encadrement (7, 57) puisse être déplacé verticalement vers le haut ou verticalement vers le bas lorsque la liaison vissée est libérée et repose dans la direction opposée sur l'autre profilé creux d'encadrement (27, 77).

3. Ensemble de transport selon les revendications 1 ou 2, **caractérisé en ce que** la vis de liaison (14) traverse la paroi profilée supérieure (9) du premier profilé creux d'encadrement (7, 57) et la paroi profilée inférieure (10) du deuxième profilé creux d'encadrement (27, 77) et est fixée.

4. Ensemble de transport selon l'une des revendications 1 à 3, **caractérisé en ce que** la vis de liaison (14) traverse un élément de soutien (15) placé dans la cavité profilée (24) et s'appuie sur ce dernier.

5. Ensemble de transport selon l'une des revendications 1 à 4, **caractérisé en ce que** la vis de liaison (14) traverse un élément fileté (16) placé à l'extérieur ou à l'intérieur de la paroi profilée supérieure ou inférieure (10) et est vissée sur ce dernier.

6. Ensemble de transport selon l'une des revendications 1 à 5, **caractérisé en ce qu'**au niveau du décalage, le bord frontal (17) des deux parois latérales profilées (11) des profilés creux d'encadrement (7, 27; 57, 77) est configuré en forme de Z ou en forme de S transversalement par rapport à l'axe longitudinal (L) du profilé.

7. Ensemble de transport selon l'une des revendications 1 à 6, **caractérisé en ce que** les bords frontaux (17) des parois latérales profilées (11) des profilés creux d'encadrement (7, 27; 57, 77) ayant des configurations complémentaires dans la section frontale d'extrémité (8, 28; 58, 78) de telle sorte que les parois latérales profilées (11) des profilés creux d'encadrement (7, 27) puissent être reliées en correspondance géométrique.

8. Ensemble présentant au moins deux profilés d'encadrement (7, 27) permettant d'établir une structure d'encadrement (6) pour un dispositif de transport selon l'une des revendications 1 à 7, les profilés creux d'encadrement (7, 27) étant configurés comme profilés allongés latéraux et pouvant être reliés l'un à l'autre sur leur axe longitudinal (L) de profilé par des sections frontales d'extrémité (8, 28; 58, 78), les deux ou plusieurs profilés d'encadrement (7, 27) étant des profilés creux,
**caractérisé en ce que**
les profilés creux d'encadrement (7, 27; 57, 77) forment sur leur section frontale d'extrémité (8, 28; 58, 78) une liaison en correspondance géométrique qui s'oppose à des forces agissant longitudinalement, transversalement et verticalement sur la liaison,
**en ce que** pour s'opposer aux forces agissant longitudinalement sur la liaison :
deux parois latérales (11) des profilés creux d'encadrement (7, 27; 57, 77) forment chacune dans la section frontale d'extrémité (8, 28; 58, 78) un bord frontal présentant une première section (17a) de bord frontal et une deuxième section (17b) de bord frontal présentant un décalage par rapport à la première section (17a) de bord frontal le long de l'axe longitudinal (L) du profilé,
**en ce qu'**au niveau du décalage entre la première section et la deuxième section de bord frontal (17a, 17b), les bords frontaux (17) des deux parois latérales (11) des profilés creux d'encadrement (7, 27; 57, 77) forment transversalement par rapport à l'axe longitudinal (L) de profilé un creux (18) en forme de rainure qui se prolonge en direction de l'extrémité du profilé en une saillie (22) orientée vers une paroi supérieure ou une paroi inférieure du profilé,
**en ce que** la saillie (22) possède la fonction d'un crochet en combinaison avec le creux (18) en forme de rainure,
**en ce que** la saillie (22) est orientée verticalement vers le haut sur un profilé d'encadrement (7, 27; 57, 77) et la saillie (22) est orientée verticalement vers le bas sur un profilé d'encadrement (7, 27; 57, 77) complémentaire,
**en ce qu'**un profilé d'encadrement (7, 27; 57, 77) peut être suspendu par l'intermédiaire de la saillie (22) dans le creux du profilé (7, 27; 57, 77) complémentaire, et
**en ce que** pour s'opposer aux forces agissant transversalement sur la liaison :
par son bord frontal (23), la paroi supérieure et/ou la paroi inférieure (9, 10) d'un des profilés d'encadrement (27) forme dans la section frontale d'extrémité (28) une saillie (20) orientée le long de l'axe longitudinal (L) du profilé et par son bord frontal (23), la paroi supérieure et/ou la paroi inférieure (9, 10) complémentaires de l'autre profilé d'encadrement (7) forme dans la section frontale d'extrémité (8) un creux (21) orienté suivant l'axe longitudinal (L) du profilé et correspondant à la saillie (20), la saillie (20) et le creux (21) ayant des configurations complémentaires de telle sorte que les parois supérieures et/ou les parois inférieures (9, 10) des profilés d'encadrement (7, 27) sont reliées en correspondance géométrique ou
**en ce que** dans la section frontale d'extrémité (78), un profilé d'encadrement (77) contient un élément de guidage (72) disposé sur le côté intérieur de la paroi supérieure et/ou de la paroi inférieure (9, 10) du profilé et qui déborde du bord frontal (23) suivant l'axe longitudinal (L) du profilé ou
en ce dans la section frontale d'extrémité (78), un profilé d'encadrement (77) comporte un élément (73) de guidage latéral placé à l'intérieur des parois latérales (11) du profilé et qui déborde du bord frontal (17),
**en ce que** l'élément de guidage (72) qui déborde du bord frontal (23) ou les éléments de guidage latéral (73) qui débordent des bords frontaux (17) engagent par leur section en débord la cavité profilée de la section d'extrémité du profilé complémentaire (57), et
**en ce que** pour s'opposer aux forces agissant verticalement vers le haut et verticalement vers le bas sur la liaison :
les profilés creux d'encadrement (7, 27; 57, 77) pouvant être reliés les uns aux autres par une liaison filetée à l'aide d'une vis de liaison (14), verticalement depuis le haut ou verticalement depuis le bas à travers les sections frontales d'extrémité des profilés creux d'encadrement.

9. Utilisation du dispositif de transport (1) selon l'une des revendications 1 à 7
comme bande d'entraînement de travailleur,
comme dispositif de transport d'entrepôt ou
pour le chargement et le déchargement d'un entrepôt.
